Europäisches Patentamt

**European Patent Office**

Office européen des brevets

(11) Publication number: **0 136 887**
**A2**

(12) **EUROPEAN PATENT APPLICATION**

(21) Application number: **84306611.9**

(22) Date of filing: **28.09.84**

(51) Int. Cl.⁴: **G 02 B 6/44**

(30) Priority: **05.10.83 US 539220**

(43) Date of publication of application:
**10.04.85 Bulletin 85/15**

(84) Designated Contracting States:
**AT BE CH DE GB LI**

(71) Applicant: **International Standard Electric Corporation**
**320 Park Avenue**
**New York New York 10022(US)**

(72) Inventor: **Smith, John Carswell**
**1639 Lonna Drive**
**Roanoke Virginia(US)**

(72) Inventor: **Asam, Adolf Richard**
**P.O. Box 215**
**Daleville Virginia(US)**

(72) Inventor: **Blanco Vazquez, Carlos**
**c/o Standard Electrica S/A Jose Ortegay Y Gasset**
**22-24 Madrid 6(ES)**

(74) Representative: **Vaufrouard, John Charles**
**ITT Patent Department UK Maidstone Road Foots Cray**
**Sidcup KentDA14 5HT(GB)**

(54) Optical fibre cable.

(57) An optical fibre cable employs a support member (12) fabricated from a plastics material which has embedded therein glass fibres. The support member has radially-extending arms (15) which form compartments with the outer jacket (11) of the cable. The support member has a central aperture in which a strength member (20) is inserted. Due to the construction of the support member, it is possible to reduce substantially the diameter of the strength member so as to obtain a lower cost and more efficient cable.

EP 0 136 887 A2

## OPTICAL FIBRE CABLE

This invention relates to an optical fibre cable, and more particularly to an improved slotted optical fibre cable.

Optical fibre transmissions have the advantage, among many others, of their immunity to electrical interference as the information being transmitted is in the form of light pulses. As an optical fibre is composed entirely of dielectric materials it is not affected by electric signals or corrosion effects as most of the metallic conductor materials are.

Optical fibres are packed together and protected by a jacket to form an optical fibre cable. Depending on the application, the requirements on the cable construction can be different. In some cases, no special dielectric or non-corrosive requirements have to be fulfilled, and the cable can include metallic components such as strength members or moisture-resistant barriers. In other applications, however, some specific requirements will necessitate an all-dielectric cable. An all-dielectric cable does not attract lightning.

An essential component of optical fibre cables is the strength member which provides most of the tension which it is necessary to apply to the cable during the installation works or during the cable operation.

Very few materials have been found, among the dielectric ones, with enough tensile strength and low elongation to qualify them as strength members to be used in optical fibre cables. For this reason, the price

- 2 -

of these few products is very high.

On the other hand, when the size and weight of the cable are relatively large, the diameter of the strength member required is so large that the flexibility of the final cable is seriously impaired.

These disadvantages have been found particularly crucial when designing fully dielectric open channel cables.

Some of these problems are well known and there are many patents and articles directed towards the protection and use of optical fibres in cable structures. See, for example, U.S. Patent 4,038,489 issued on July 26, 1977 to D.W.Stenson, et al. and entitled CABLES. This patent specification shows a cable for dielectric optical waveguides or fibres, in which the fibres are arranged in segmented compartments. Tensile members are provided in the core of the cable and/or externally of the segmented compartments. Another patent, U.S. 3,865,466 entitled OPTICAL GUIDES issued on February 11, 1975 to R.J. Slaughter, depicts a cable having an elongated central core consisting of at least one non-optical reinforcing member, a plurality of optical bundles arranged together in at least one stranded layer about the core and an outer protective sheath surrounding the stranded body. Other patents such as U.S. 4,072,398 and U.S. 4,199,244 depict various cable formats for protecting the optical fibres which are employed in a cable construction.

In constructing a cable employing optical fibres, there is a desire to provide the cable with proper supporting structures and to eliminate completely any metal or electrically-conducting components. In this way the cable is completely dielectric. Thus a growing number of users of optical fibre cables wish to retain the dielectric characteristics of the optical

- 3 -

fibres and avoid the use of metallic members such as steel strength members.

Hence many cable manufacturers fabricate such cables using Kevlar, Epoxy or Polyester impregnated Kevlar rods and Epoxy or Polyester impregnated "S" or "E" glass rods. These materials are relatively expensive and difficult to obtain.

It is of course a major factor in the production of such cables to keep the cost down while not departing from the electrical and mechanical properties of the product. Thus if one can reduce the cost of the dielectric strength members, one can achieve a lower cost for the optical cable.

It is therefore an object of the present invention to provide an optical fibre cable capable of being produced at a lower cost while maintaining proper strength and operating characteristics.

According to one aspect of the invention, there is provided a dielectric slotted cable for supporting optical fibres, having a tubular outer covering and containing a plastics support member having a central aperture for accommodating a central strength member, the support member having extending radial arms which abut against the inside of the outer covering to form compartments for accommodating optical fibres, the plastics support member being fabricated from a plastics material having embedded therein a plurality of glass fibres substantially oriented in the longitudinal direction along the support member, whereby the support member contributes to the strength of the cable and allows a substantial reduction in the corss-sectional area of the central strength member.

According to another aspect of the invention, there is provided an optical fibre cable, comprising a longitudinal tubular cover member, a support member disposed within the cover member, the support member having a central core from which extends a plurality of radial arms each of which are directed towards the inside surface of the cover member to form a plurality of compartments adapted to accommodate at least one optical fibre, the central core having a longitudinal aperture, and the support member being fabricated from a plastics material having embedded therein a plurality of glass fibres oriented longitudinally along the support member and of a substantially smaller length than the support, and a central strength member positioned in the aperture of the support member, whereby both the strength member and the support member provide additional support to the cable and permit a reduction in the cross-sectional area of the central strength member.

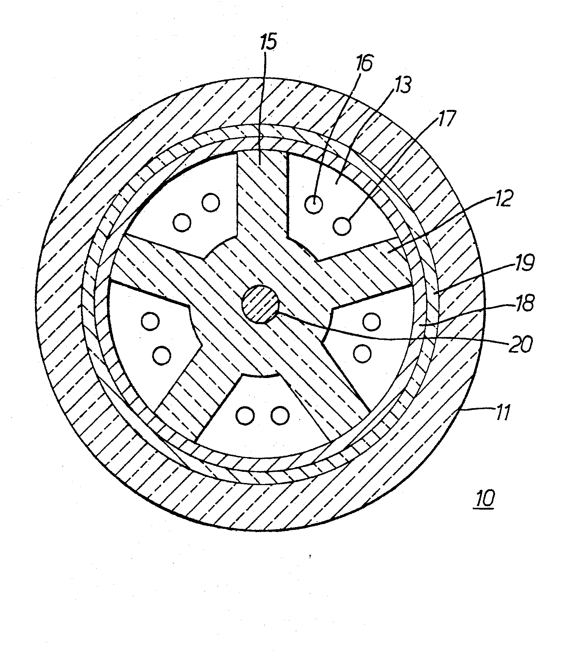

An embodiment of the invention will now be described by way of example with reference to the single figure of the accompanying drawings in the form of a cross-sectional view of a fibre optic cable employing a slotted support.

The slotted optical cable indicated generally at 10 has an outer jacket 11 which is of dielectric or insulating material and is in the form of a longitudinal tubular body. Inside the jacket 10, there is located a slotted cross-sectional supporting member 12 which provides compartments 13 by virtue of the extending radial arms 15 abutting against the inner wall of the jacket 11. Inside each compartment are one or more optical fibres such as 16 and 17 which may be loosely inserted therein or otherwise held in place. The jacket 11 contains a first wrapping 18 which may be of plastics or a polyester insulating tape and a second wrapping 19 which may be of plastics or water-proof tape. A support member 20 or strength member is located centrally relative to the slotted member 12 and serves as a strength and support for the final cable.

Hitherto the support member 12 would have been a plastics member with the central strength member being fabricated from an epoxy-impregnated glass. This is an expensive material. Other materials such as aramid fibres sold under the trademark Kevlar have also been employed for the strength member 20 but these too are expensive.

In fibre optic cable designs, it is a common practice to ascribe the whole tension required to the strength member, and to dimension this component without regard to the contribution to the strength of the rest of the elements of the cable. The remaining elements are only taken into consideration as contributors to the total cable weight.

The basic idea which embodies this patent is twofold.

Primarily it is assumed that other cable components, apart from the strength member, can also cooperate to provide the required cable tension.

Secondly, those elements are made of a material with a higher tensile modulus than and comparatively equal flexural modulus to the material they are going to replace.

The contribution to the tensile strength of a material is a function of the product of the cross-sectional area and the modulus of that material.

In order to take full advantage of the idea mentioned above, a material of relatively large cross-section must be selected. In the open channel cable, the largest cross-sectional area corresponds to the slottted profile, and consequently it has been chosen as the element intended to contribute to the cable tension.

As far as the material is concerned, the one that has been selected has a tensile modulus ten times larger than the high density polyethylene which it is going to replace. This will be called reinforced plastics material.

The reinforced profile or support member 12 is fabricated from a polymer in which there are embedded

0136887

- 6 -

short lengths of glass fibres (about ½ centimetre).
The volume percentage of glass fibres in the support
member 12 is about 25% and preferably in the range
between 25-30%.

The support member 12 is extruded with the
glass fibres and, as the extrusion process continues,
the short glass fibres which are originally interspersed
in the plastic material in a random orientation became
reoriented so as to extend in the longitudinal direction
of the support member 12. In practice, the extrusion
process pushes the fibres into the plastic so that they
are not exposed at the surface.

The basic strength member remains the S-glass
made of glass fibres impregnated in an epoxy resin.

The new cable is designed to take into account
the added weight provided by the reinforced plastics
material (nearly two times heavier than the polyethylene)
and the composite strength of both the S-glass and the
reinforced profile support member 12.

The new cable only requires an S-glass strength
member that has a diameter 2.6 times smaller than that
required in a prior art design.

In consequence, the new cable overcomes both
problems that were mentioned earlier.

a. The cost of the cable will be reduced as it
uses significantly less quantity of the proportionately
most expensive component.

b. The flexibility of the whole cable will also
be improved as the diameter of the S-glass has been
dramatically reduced.

CLAIMS:

1. A dielectric slotted cable for supporting optical fibres, having a tubular outer covering and containing a plastics support member having a central aperture for accommodating a central strength member, the support member having extending radial arms which abut against the inside of the outer covering to form compartments for accommodating optical fibres, the plastics support being fabricated from a plastics material having embedded therein a plurality of glass fibres substantially oriented in the longitudinal direction along the support member, whereby the support member contributes to the strength of the cable and allows a substantial reduction in the cross-sectional area of the central strength member.

2. The optical cable according to claim 1, wherein the plastics support member is fabricated from polyethylene.

3. The optical fibre cable according to claim 2, wherein the glass fibres are approximately 0.5 centimetres in length.

4. The optical fibre cable according to claim 1, wherein the fibres comprise between 25-30% of the material volume of the support member.

5. The optical fibre cable according to claim 1, wherein the glass fibres are pushed into the plastics support member material so they are substantially absent from the surface of the tubes.

6. The optical fibre cable according to claim 1, wherein the strength member is fabricated from a epoxy-impregnated glass.

7. The optical fibre cable according to claim 1, wherein the strength member is fabricated from glass-reinforced plastics material.

8. The optical fibre cable according to claim 7, wherein the plastics material is polyethylene.

- 8 -

9. An optical fibre cable, comprising a longitudinal tubular cover member, a support member disposed within the cover member, the support member having a central core from which extends a plurality of radial arms each of which are directed towards the inside surface of the cover member to form a plurality of compartments adapted to accommodate at least one optical fibre, the central core having a longitudinal aperture, and the support member being fabricated from a plastics material having embedded therein a plurality of glass fibres oriented longitudinally along the support member and of a substantially smaller length than the support member, and a central strength member positioned in the aperture of the support member, whereby both the strength member and the support member provide additional support to the cable and permit a reduction in the cross-sectional area of the central strength member.

10. The optical fibre cable according to claim 9, wherein the plastics material is polyethylene.

11. The optical fibre cable according to claim 9, wherein the glass fibres are approximately 0.5 centimetres in length.

12. The optical fibre cable according to claim 9, wherein the support member is extruded with the glass fibres.

13. The optical fibre cable according to claim 9, wherein the central strength member is an epoxy-impregnated glass member.

14. The optical fibre cable according to claim 9, wherein the fibres comprise between 25-30% of the material volume of the support member.

15. The optical fibre cable according to claim 9, wherein the strength member is fabricated from a glass-reinforced plastic.

16.   The optical fibre cable according to claim 15, wherein the plastics material is polyethylene.

17.   The optical fibre cable according to claim 9, wherein the glass fibres are pushed into the support member so that they are substantially absent from the surface.

18.   An optical fibre cable substantially as described with reference to the accompanying drawings.

0136887

10